**Europäisches Patentamt**

**European Patent Office**

**Office européen des brevets**

(19)

(11) Numéro de publication : **0 011 554**
**B1**

(12) **FASCICULE DE BREVET EUROPÉEN**

(45) Date de publication du fascicule du brevet :
07.04.82

(21) Numéro de dépôt : 79400837.5

(22) Date de dépôt : 09.11.79

(51) Int. Cl.³ : **B 23 Q 11/08, F 16 P 1/00,
H 02 B 1/08**

(54) **Armature de sécurité pour machines-outils.**

(30) Priorité : 10.11.78 FR 7831858

(43) Date de publication de la demande :
28.05.80 (Bulletin 80/11)

(45) Mention de la délivrance du brevet :
07.04.82 Bulletin 82/14

(84) Etats contractants désignés :
AT BE CH DE FR GB IT LU NL SE

(56) Documents cités :
BE - A - 831 969
CH - A - 508 293
US - A - 2 664 332

(73) Titulaire : **Piget, Maurice**

**F-27120 Boisset les Prevanches (FR)**

(72) Inventeur : **Piget, Maurice**

**F-27120 Boisset les Prevanches (FR)**

(74) Mandataire : **L'Helgoualch, Jean et al
OFFICE PICARD 134 Boulevard de Clichy
F-75018 Paris (FR)**

Imprimerie Jouve, 18, rue St-Denis, 75001 Paris, France

Armature de sécurité pour machines-outils

Armature de sécurité pour machines-outils. La présente invention concerne un dispositif de sécurité pour machines-outils, et plus particulièrement une armature de sécurité constituée de deux parties, l'une fixe, l'autre mobile, chaque partie étant réalisée en un profilé dont la structure permet d'abriter les contacts, composants, et circuits de sécurité assurant une sécurité active et une sécurité passive.

Les accidents du personnel employé sur les machines-outils ont amené les organisations professionnelles et l'Administration à imposer aux fabricants des réglementations et des appareillages de protection individuelle et collective complexes. La variété d'opérations sur un même type de machine fait de chaque protection un cas de réalisation particulière constituant un handicap du point de vue du prix de revient.

La présente invention a essentiellement pour objet la réalisation autour de chaque machine d'une enveloppe protectrice vitrée permettant d'exercer la surveillance dans le fonctionnement de la machine, les parties vitrées étant encadrées par une armature comprenant deux parties, l'une fixe, l'autre mobile, constituées de profilés dont l'assemblage est obtenu par un procédé connu, la mise en place s'effectuant sans utilisation d'autres pièces que les vitrages découpés aux dimensions.

La présente invention a encore pour objet une armature de sécurité constituée d'une partie fixe et d'une partie mobile, dont la séparation assure la coupure des circuits électriques de commande des organes, soit par approche, soit par éloignement des composants : contacts et masses aimantées.

L'armature de sécurité conforme à la présente invention comprend une partie fixe et une partie mobile constituées de profilés assemblés par des moyens connus formant des montants et des traverses, portant des composants commandant les circuits de sécurité actionnés par manœuvre de la partie mobile, et selon une caractéristique principale de l'invention, la partie fixe est constituée par un profilé unique à alvéole central fermé entouré de plusieurs alvéoles ou feuillures ouverts obturables abritant les composants et les circuits de sécurité, et la partie mobile est constituée par un profilé s'articulant sur la partie fixe et abritant des composants coopérant avec ceux de la partie fixe.

Le profilé fixe comporte de préférence un alvéole central fermé entouré de neuf alvéoles ou feuillures ouverts pouvant recevoir les vitrages, les organes de fixation et de manœuvre, ainsi que les composants et câbles électriques constituant le système de sécurité, ces alvéoles pouvant être fermés après équipement par un profilé complémentaire rapporté. Ce profilé fixe est de section générale carrée.

Le profilé mobile a de préférence la forme d'une cornière comportant un alvéole d'angle fermé et des alvéoles ouverts pour la réception des vitrages, des organes de fixation, des axes de pivotement des paumelles, et des masses aimantées de sécurité active. Ce profilé mobile une fois monté forme une porte venant s'adapter sur le profilé fixe.

Cette armature de sécurité portant un vitrage et des moyens d'assemblage et de commande, permet de soustraire à la vue les composants des circuits de sécurité, limitant ainsi les risques de fausse manœuvre ou de détérioration des circuits.

En outre, l'armature de sécurité conforme à l'invention est entièrement constituée de deux types de profilés seulement, auxquels sont combinés les vitrages, les pièces de fixation, les composants et les câbles électriques, ce qui simplifie sa fabrication et en abaisse le coût.

Les caractéristiques et avantages de l'invention apparaîtront plus en détail de la description ci-après, en référence aux dessins annexés représentant deux formes préférentielles de réalisation, l'une convenant pour des structures importantes, l'autre pour de petites structures.

Les figures 1 à 7 sont relatives à une armature conforme à l'invention adaptée à des structures importantes, tandis que la figure 8 est relative à une structure de petit volume.

La figure 1 représente une coupe horizontale des profilés fixe et mobile verticaux, au niveau de leur articulation.

La figure 2 est une coupe verticale des profilés horizontaux inférieurs.

La figure 3 est une coupe horizontale des profilés verticaux montrant un exemple de mise en place de composants de sécurité, conformément à l'invention.

La figure 4 est une vue en perspective et en coupe de deux montants correspondants, constitués chacun d'un profilé fixe et d'un profilé mobile.

La figure 5 représente une vue en perspective des profilés fixe et mobile assemblés.

Les figures 6 et 7 représentent un détail de montage du profilé fixe.

La figure 8 est une vue en perspective d'une armature conforme à l'invention adaptée à une structure de petit volume.

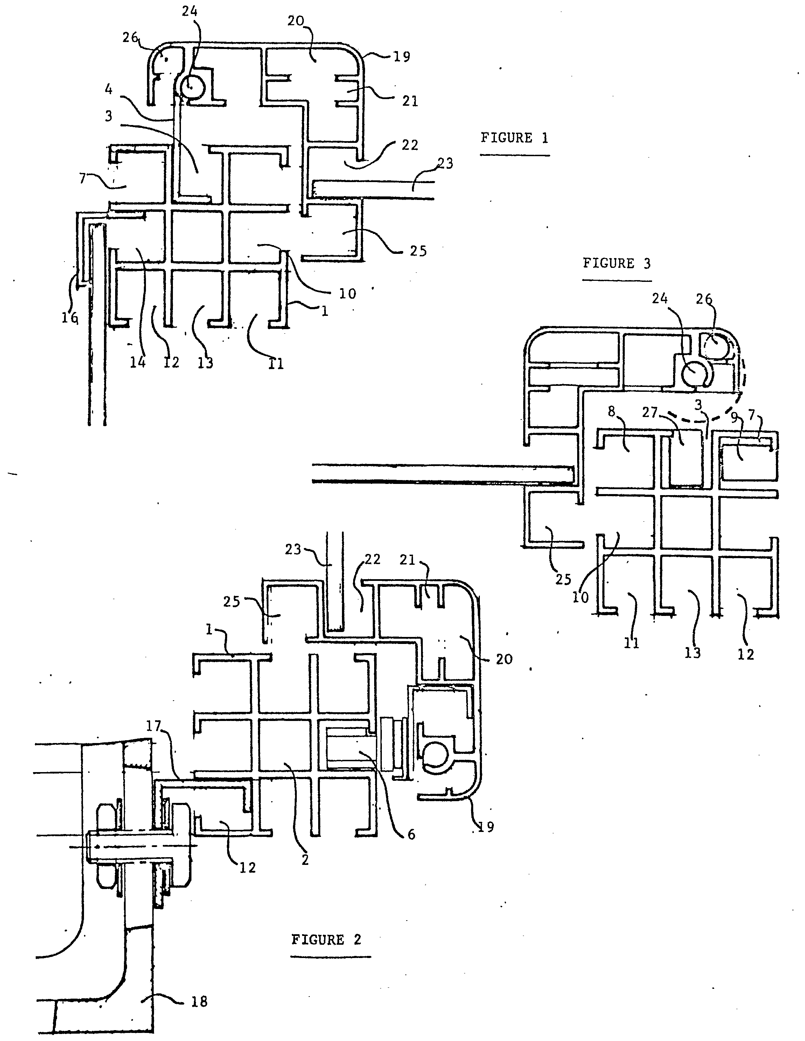

Dans l'armature pour structure importante représentée sur les figures 1 à 7, la partie fixe immobilisée sur le bâti de la machine est réalisée dans un profilé 1 en alliage léger de section carrée à multiples alvéoles, dont l'alvéole central 2 est destiné à la réception d'équerres de tenue mécanique, et qui est entouré d'alvéoles de fonction 3, 7, 8, 10, 11, 12, 13 et 14. Dans ces divers alvéoles les assemblages peuvent être obtenus au moyen de lames de ressort d'un type connu.

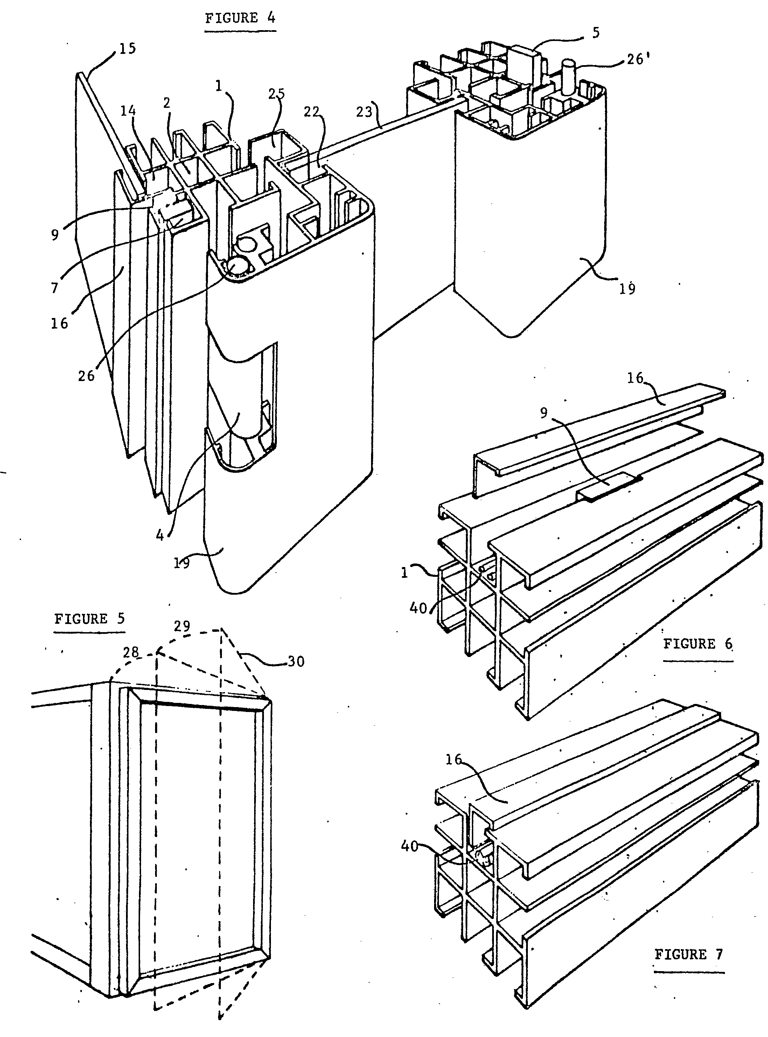

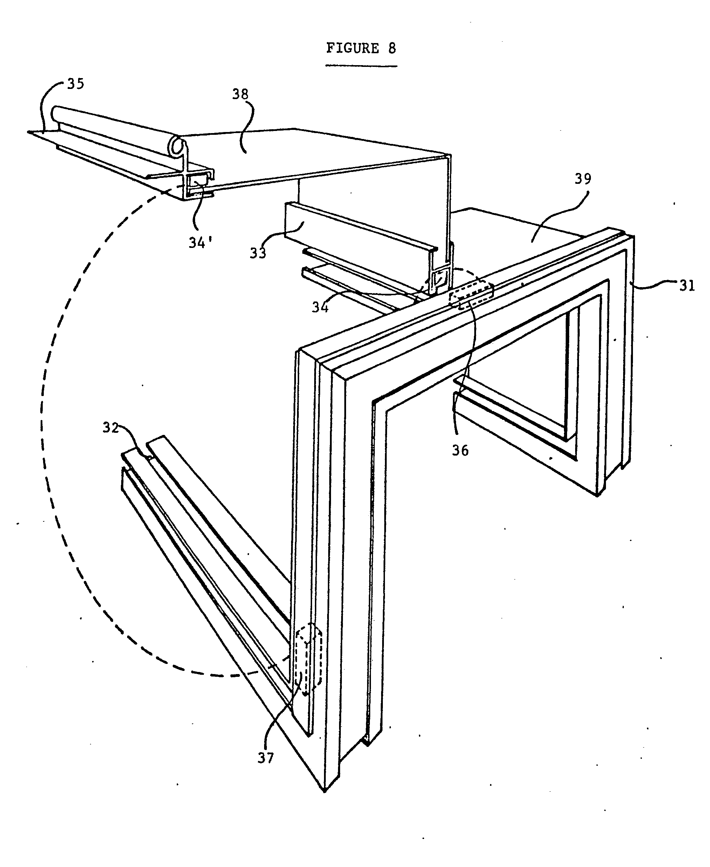

Dans les profilés verticaux, l'alvéole 3 reçoit d'un côté les paumelles 4 portant l'axe de pivotement de la partie mobile, et du côté opposé le composant de contact 5 représenté sur la figure 4.

Dans les profilés horizontaux tels que représentés en coupe verticale sur la figure 2, l'alvéole 3 est réservé à la réception des loqueteaux magnétiques de fermeture 6. L'alvéole 7 est destiné à la réception des composants du contact de sécurité dite active 9. Les alvéoles 8, 10, 11, 12, et 13 servent de gaines de réception pour les organes d'assemblage, ou pour les composants et circuits de commande ou de sécurité. L'alvéole 14 sert à la réception d'une cornière 16 assurant le maintien du vitrage 15. Dans le profilé horizontal de base de l'enveloppe protectrice, l'alvéole 12 sert à la réception des pièces de raccordement 17 avec l'équerre 18 du bloc machine, comme représenté sur la figure 2.

Le profilé mobile 19, également réalisé en alliage léger, a la forme d'une cornière et se juxtapose, comme on le voit sur les figures 1 à 4, à deux des faces du profilé fixe 1 pour former une porte. Il comporte un alvéole fermé 20 formant l'angle, dans lequel est réservée une gaine de réception 21 des équerres de tenue mécanique, un alvéole 22 pour la réception du vitrage 23, un alvéole 24 pour la réception de l'axe de pivotement des paumelles dans un montant vertical, ou d'une pièce assurant la fermeture par contact avec le loqueteau 6 dans une traverse horizontale, un alvéole 25 en regard de l'alvéole 10 du profilé fixe, la porte étant fermée, et un alvéole pour la réception d'une masse aimantée 26 de sécurité dite active du côté de l'axe de rotation de la partie mobile, et d'une masse aimantée 26', de sécurité dite passive, de l'autre côté.

Lors de la manœuvre d'ouverture de la porte, comme le montre la figure 3, la masse aimantée 26 fixée près de l'axe de pivotement 24, se rapproche du contact 9 placé dans l'alvéole 7, et à l'opposé, comme le montre la figure 4, la masse aimantée 26' s'éloigne du contact 5 de telle sorte que, du côté de l'axe de pivotement; il y a rupture du circuit moteur par l'approche de deux composants, ce dispositif étant dénommé « sécurité active » tandis que du côté opposé à l'axe de pivotement, la coupure du circuit moteur résulte de l'éloignement des deux composants, dispositif dénommé « sécurité passive ». C'est la succession de ces deux opérations qui procure une sécurité absolue et inviolable, par rupture des courants moteurs. La sécurité passive agit tout d'abord dès séparation de la masse aimantée 26' et du contact 5, mais dès que l'ouverture de la porte est suffisante pour permettre à un opérateur de neutraliser l'action du contact par l'apport d'une masse aimantée complémentaire, la sécurité active entre en action, la masse aimantée 26 se trouvant suffisamment proche du contact 9 en raison de l'angle d'ouverture de la porte. Les composants intégrés aux armatures ne pouvant être ni déplacés ni retirés, la sécurité se trouve inviolable. Dans certains cas ne nécessitant qu'une protection limitée, on pourra ne prévoir que le dispositif de sécurité active.

Suivant une caractéristique avantageuse de l'invention, on utilise des loqueteaux magnétiques 6 exerçant une force d'attraction de la partie mobile de valeur relativement importante. Ainsi pour ouvrir la porte, l'opérateur doit exercer une traction suffisante pour vaincre la force de rappel du loqueteau magnétique, qui a pour effet de donner au mouvement d'ouverture de la porte une vitesse initiale relativement élevée, et, par conséquent, de rapprocher rapidement la masse aimantée 26 du contact 9, assurant un fonctionnement immédiat de la sécurité active.

La combinaison des deux types de sécurité permet de créer, avec une porte en position d'ouvertures progressives, des coupures ou des rétablissements de courant moteur, permettant des opérations de réglage ou de dégagement de pièces bloquées.

Dans un tel dispositif, représenté schématiquement sur la figure 5, on obtient :

— une plage 28 de première rupture de courant, avec accompagnement le cas échéant d'une signalisation lumineuse ;

— une plage 29 de neutralisation correspondant à un angle d'ouverture plus important de la porte, où les sécurités active et passive ne sont pas sollicitées, ce qui, par un dispositif approprié, permet de rétablir momentanément le courant moteur, avec accompagnement d'un signal sonore ou lumineux ; après rétablissement du courant moteur il conviendra de fermer la porte pour reprendre le cycle de fonctionnement normal ;

— une plage 30 correspondant à un angle plus important d'ouverture de la porte, provoquant la rupture définitive du courant ; le rétablissement du circuit moteur ne peut alors intervenir qu'après fermeture de la porte et actionnement des commandes au coffret principal.

Un tel dispositif donne à l'opérateur une possibilité d'intervention par une simple manœuvre de porte, dans toutes les opérations à caractère fortuit, et en conservant la sécurité requise.

Le mécanisme de sécurité active permet d'envisager des dispositifs complexes. C'est ainsi qu'une même masse aimantée peut agir sur plusieurs lignes de contacts disposés dans des alvéoles voisins ; ainsi, en manœuvrant la porte, on peut obtenir des coupures successives concernant des circuits différents.

En plaçant par exemple deux lignes de contact dans les alvéoles 3 et 7, comme représenté sur la figure 3, dans une première position d'ouverture, l'approche de la masse aimantée 26 du contact 9 provoque une rupture d'alimentation du poste de travail disposé immédiatement derrière la porte ; dans la position d'ouverture suivante, tout en conservant la coupure du premier circuit, l'approche de la masse aimantée 26 du contact 27 provoque une seconde coupure affectant le circuit moteur d'un poste de travail voisin. Un tel dispositif, qui permet à un opérateur d'isoler son propre poste de travail, lui permet également d'isoler un poste de travail voisin en cas de nécessité. Ainsi, dans le fonctionnement d'une chaîne de machines, en cas de difficulté survenant à un opérateur qui ne peut assurer sa propre sécurité, un autre opérateur peut, à distance, intervenir sans avoir à se déplacer. Tous ces dispositifs peuvent être combinés pour créer au niveau de l'une des portes une programmation pour des interventions occasionnelles, tandis que dans les systèmes usuels, ces dispositifs sont généralement rassemblés au tableau principal de commande, souvent éloigné de l'ensemble des postes de travail.

Comme le montre la figure 6, une cornière 16, identique à celle assurant le maintien du vitrage 15, peut être insérée dans un alvéole pour assurer la protection d'un composant, par exemple le contact 9, dont la position peut être marquée par une encoche, et des câbles 40 des circuits. Cette cornière 16 peut être maintenue en place par des moyens connus et assure ainsi une bonne protection des composants, comme le montre la figure 7, renforçant encore la sécurité.

Sur la figure 8, représentant une armature de sécurité conforme à l'invention, s'appliquant à une structure de petit volume, la partie fixe est constituée par le profilé 31 comportant de multiples alvéoles, semblabe au profilé 1 en alliage léger. Le vitrage fixe 39 est mis en place dans l'alvéole 32 du profilé fixe.

La partie mobile comprend, du côté de l'axe de pivotement, un profilé 33 à double alvéole, l'un pour la réception du vitrage mobile 38, l'autre pour la réception d'une masse aimantée. A son autre bord, le vitrage 38 est serti d'un profilé 35 dont l'alvéole renferme à une extrémité la masse aimantée 34' de sécurité passive. Les composants de contact sont placés dans le même alvéole du profilé fixe 31, en 36 pour la sécurité active, et en 37 pour la sécurité passive.

### Revendications

1. Armature de sécurité pour machines-outils, comprenant une partie fixe (1) et une partie mobile (19) constituées de profilés assemblés par des moyens connus formant des montants et des traverses, portant des composants commandant les circuits de sécurité actionnés par la manœuvre de la partie mobile, caractérisée en ce que ladite partie fixe est constituée par un profilé unique (1) à alvéole central (2) fermé, entouré de plusieurs alvéoles ou feuillures ouverts obturables, abritant les composants et les circuits de sécurité, et la partie mobile est constituée par un profilé (19) s'articulant sur la partie fixe et abritant des contacts coopérant avec ceux de la partie fixe.

2. Armature de sécurité selon la revendication 1, caractérisée en ce qu'elle comporte deux types de profilés, l'un constituant la partie fixe (1), l'autre la partie mobile (19).

3. Armature de sécurité selon l'une quelconque des revendications 1 et 2, caractérisée en ce que le profilé fixe (1) est de section générale carrée et comporte, autour d'un alvéole central (2) fermé, des alvéoles ouverts pouvant recevoir le vitrage, les moyens de fixation et de manœuvre, ainsi que les composants et circuits électriques de sécurité, ces alvéoles pouvant être fermés par un profilé complémentaire.

4. Armature de sécurité selon l'une quelconque des revendications 1 et 2, caractérisée en ce que le profilé mobile (19) a la forme d'une cornière se juxtaposant à deux des faces du profilé fixe (1), et comporte un alvéole d'angle (20) fermé et des alvéoles ouverts pour la réception du vitrage (23), des moyens de fixation de l'axe de pivotement (24), et des masses aimantées de sécurité active (26).

5. Armature de sécurité selon l'une quelconque des revendications précédentes, caractérisée en ce qu'elle comporte des moyens disposés dans les profilés de telle sorte que le déplacement progressif du profilé mobile par rapport au profilé fixe provoque des coupures successives dans des circuits différents.

6. Armature de sécurité selon la revendication 5, caractérisée en ce qu'une masse aimantée (26) est placée dans un alvéole du profilé mobile (19) adjacent à l'axe de pivotement (24), de telle sorte que le mouvement du profilé mobile (19) par rapport au profilé fixe (1) mette la masse aimantée (26) successivement à proximité de deux contacts (9 et 27) placés dans deux alvéoles adjacents (7) et (3) du profilé fixe (1).

7. Armature de sécurité selon l'une quelconque des revendications précédentes, caractérisée en ce que les profilés sont réalisés en alliage léger.

### Claims

1. Protective encasement for machine tools, comprising a fixed part (1) and a movable part (19) composed of profiles assembled by known means forming uprights and cross-pieces, bearing components controlling the safety circuits activated by the operation of the movable part, wherein the fixed part comprises a single profile (1) with a central closed cell (2), surrounded by several open cells or grooves, which can be closed and contain the safety components and circuits, and the movable parts comprises a profile (19) which articulates on the fixed part and contains contacts cooperating with those of the fixed part.

2. The protective encasement of Claim 1 comprising two types of profiles, one comprising the fixed part (1), the other the movable part (19).

3. The protective encasement of Claim 1 or 2, wherein the fixed profile (1) is of a general square cross-section and comprises, around a central closed cell (2), open cells capable of receiving windows, latching and operating means, as well as electric safety components and circuits, these cells capable of being closed by an additional profile.

4. The protective encasement of Claim 1 or 2, wherein the movable profile (19) is angle shaped in juxtaposition to two of the surfaces of the fixed profile (1) and comprises a closed angle cell (20) and open cells for receiving windows (23), latching means of the pivoting axis (24), and magnetized bodies for active protection (26).

5. The protective encasement of any one of the preceding claims, which comprises means fitted in the profiles in such a manner that the progressive movement of the movable profile in relation to the fixed profile causes successive interruptions in different circuits.

6. The protective encasement of Claim 5, wherein a magnetized body (26) is placed in one cell of the movable profile (19) adjacent to the pivoting axis (24), in such a manner that the movement of the movable profile (19) in relation to the fixed profile (1) places the magnetized body (26) successively in the proximity of two contacts (9, 27) placed in two adjacent cells (7, 13) of the fixed profile (1).

7. The protective encasement of any one of the preceding claims, wherein the profiles are made of a light alloy.

**Ansprüche**

1. Sicherheitsgestell für Werkzeugmaschinen mit einem festen (1) und einem beweglichen (19) Teil aus herkömmlich zusammengebauten Profileisen als Ständer und Träger für die Bauteile der Sicherheitsschaltungen, die durch Bedienung des beweglichen Teils gesteuert werden, dadurch gekennzeichnet, dass der feste Teil aus einem einzigen Profileisen (1) mit geschlossener Mittelzelle (2) umgeben von mehreren offenen verschliessbaren Zellen bzw. Falzen, besteht, die die Bauteile und Sicherheitsschaltungen enthalten, und der bewegliche Teil aus einem auf dem festen Teil schwenkbaren Profileisen (19) mit Kontakten verbunden mit den Kontakten des festen Teils, besteht.

2. Sicherheitsgestell nach Anspruch 1, dadurch gekennzeichnet, dass es aus zwei Profileisentypen besteht, wobei das eine den festen Teil (1) und das andere den beweglichen Teil (19) darstellen.

3. Sicherheitsgestell nach eines der Ansprüche 1 oder 2, dadurch gekennzeichnet, dass das feste Profileisen (1) einen viereckigen Querschnitt hat und die geschlossene Mittelzelle (2) von mehrere offenen Zellen für die Verglasung, Befestigungs- und Handhabungsmittel sowie die Bestandteile und elektrischen Sicherheitsschaltungen umgeben ist, und diese Zellen durch ein zusätzliches Profileisen geschlossen werden können.

4. Sicherheitsgestell nach eines der Ansprüche 1 oder 2, dadurch gekennzeichnet, dass das bewegliche Profileisen (19) als Winkelprofil ausgebildet ist, das neben den beiden Seiten des festen Profileisen (1) liegt und eine geschlossene Winkelzelle (20) sowie offene Zellen für die Verglasung (23), die erforderlichen Befestigungsmittel der Schwenkachse (24) und der aktiven Sicherheits-Magnetgewichte (26) enthält.

5. Sicherheitsgestell nach eines der o.a. Ansprüche, dadurch gekennzeichnet, dass diese Ausrüstung in den Profileisen über entsprechende Mittel verfügt, dass die Verschiebung des beweglichen Profileisens im Verhältnis zum festen Profileisen eine Unterbrechungsfolge der einzelnen Schaltungen verursacht.

6. Sicherheitsgestell nach Anspruch 5, dadurch gekennzeichnet, dass die Magnetgewicht (26) im einer neben der Schwenkachse liegenden Zelle des beweglichen Profileisens (19), dass die Verschiebung des beweglichens Profileisens (19) im Verhältnis zum festen Profileisen (20) die Magnetgewicht (26) neben zwei in zwei Zellen (7), (3) des festen Profileisens (1) liegenden Kontakten (9), (27) herbeibringt.

7. Sicherheitsgestell nach eines der o.a. Ansprüche, dadurch gekennzeichnet, dass die Profileisen aus Leichtmetall bestehen.

FIGURE 1

FIGURE 3

FIGURE 2

FIGURE 4

FIGURE 5

FIGURE 6

FIGURE 7

FIGURE 8